# EUROPEAN PATENT APPLICATION

(11) **EP 3 922 742 A1**
(43) Date of publication of application: **15.12.2021**
(21) Application number: 21177540.8
(22) Date of filing: 03.06.2021
(51) Int. Cl.: C22B 1/00, C22B 7/00, B23K 26/122, B23K 26/142

(54) **METHOD FOR RECOVERING VALUABLES**

(30) Priority: 10.06.2020 JP 2020100885
(71) Applicant: A&H Japan Corporation, Nishiyodogawa-ku Osaka-shi Osaka 555-0042 (JP)
(72) Inventor: HIEDA, Toshihiko, Osaka, 555-0042 (JP); TAKEDA, Masaharu, Osaka, 555-0042 (JP); KIKUCHI, Yoshiyasu, Osaka, 555-0042 (JP); WATANABE, Kenji, Osaka, 555-0042 (JP); ARAI, Tomohiro, Osaka, 555-0042 (JP)
(74) Representative: Mewburn Ellis LLP

(57) **Abstract**

A method for recovering valuables, which can suppress the loss of valuables in recovering the valuables is provided. The method for recovering valuables of the disclosure comprises: a preparation step of preparing a treatment object including a valuables-containing member that contains valuables on or above a surface of a base material; an immersion step of immersing the treatment object in a liquid such that the valuables-containing member of the treatment object is disposed in the liquid; a collection step of irradiating the valuables-containing member of the treatment object immersed in the liquid with laser light through the liquid so as to remove the valuables-containing member from the treatment object, thereby collecting removed matter of the valuables-containing member into the liquid; and a recovery step of recovering the removed matter of the valuables-containing member from the liquid.

## Description

### BACKGROUND

### Technical Field

The present disclosure relates to a method for recovering valuables from a treatment object including a valuables-containing member on the surface of a base material.

### Description of Related Art

Valuables such as precious metals and rare metals are often industrially particularly useful materials, and are used in members of products in a wide range of fields, including electronic components and semiconductor products, plated products, automobile-related products, non-ferrous metal products, chemical catalyst-related products, and liquid crystal-related products. Due to the limited reserves of these valuables, various valuables contained in the members of used ones of these products are being actively recovered.

As a method for recovering valuables contained in a member of a used product, for example, a method for scraping a valuables-containing member by physical polishing using a grinder, a blaster, or the like is known.

### SUMMARY

However, in the method for removing a valuables-containing member by physical polishing, the removed powder of the valuables-containing member is scattered, which may cause the loss of valuables in recovering the valuables. Even with the use of equipment such as a dust collector, it is difficult to completely eliminate the loss in recovering the valuables.

The present disclosure has been made in view of the above, and the present disclosure provides a method for recovering valuables, which can suppress the loss of valuables in recovering the valuables.

In order to achieve the above object, the method for recovering valuables of the disclosure comprises: a preparation step of preparing a treatment object (object to be processed) including a valuables-containing member that contains valuables on or above a surface of a base material; an immersion step of immersing the treatment object in a liquid such that the valuables-containing member of the treatment object is disposed in the liquid; a collection step of irradiating the valuables-containing member of the treatment object immersed in the liquid with laser light through the liquid so as to remove the valuables-containing member from the treatment object, thereby collecting removed matter of the valuables-containing member into the liquid; and a recovery step of recovering the removed matter of the valuables-containing member from the liquid.

According to the method for recovering valuables of the present disclosure, it is possible to suppress the loss of valuables in recovering the valuables.

The apparatus for recovering valuables of the present disclosure comprises: a liquid tank; and a laser irradiator for irradiating a valuables-containing member of a treatment object (object to be processed) immersed in a liquid in the liquid tank with laser light through the liquid.

According to the apparatus for recovering valuables of the present disclosure, it is possible to suppress the loss of valuables in recovering the valuables.

The method for producing valuables of the disclosure comprises: a preparation step of preparing a treatment object (object to be processed) including a valuables-containing member that contains valuables on or above a surface of a base material; an immersion step of immersing the treatment object in a liquid such that the valuables-containing member of the treatment object is disposed in the liquid; a collection step of irradiating the valuables-containing member of the treatment object immersed in the liquid with laser light through the liquid so as to remove the valuables-containing member from the treatment object, thereby collecting removed matter of the valuables-containing member into the liquid; and a recovery step of recovering the removed matter of the valuables-containing member from the liquid.

According to the method for producing valuables of the present disclosure, as it is possible to suppress the loss of valuables in recovering the valuables, the valuables can be produced with a high yield using the treatment object as a starting material.

### EFFECT

According to the present disclosure, it is possible to suppress the loss of valuables in recovering the valuables.

### BRIEF DESCRIPTION OF THE DRAWINGS

FIG. 1 is a schematic side view of steps showing an example of a method for recovering valuables according to the embodiment; and
FIG. 2 is a schematic side view showing an apparatus for recovering valuables used in the method for recovering valuables shown in FIG. 1.

### DETAILED DESCRIPTION

Hereinafter, an embodiment according to the method for recovering valuables, apparatus for recovering valuables, and method for producing valuables of the present disclosure will be described.

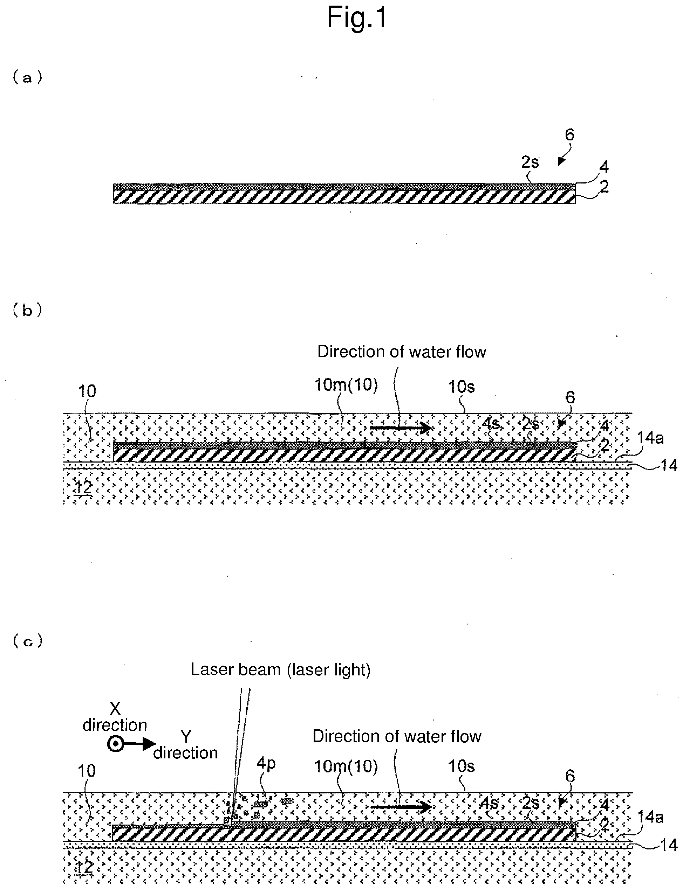

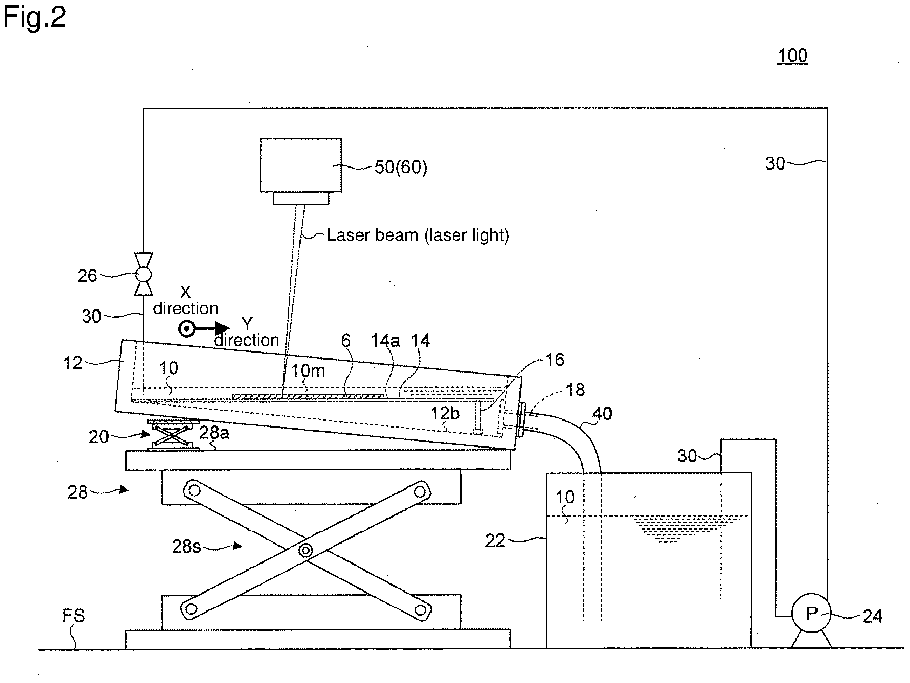

First, an outline of the method for recovering valuables and the apparatus for recovering valuables according to the embodiment will be described by showing an example of the method and the apparatus. FIG. 1 is a schematic side view of steps showing an example of the method for recovering valuables according to the embodiment. FIG. 2 is a schematic side view showing an apparatus for recovering valuables used in the method for recovering valuables shown in FIG. 1.

Here, before explaining the method for recovering valuables shown in FIG. 1, an apparatus for recovering valuables 100 shown in FIG. 2 will be described in advance. As shown in FIG. 2, the apparatus for recovering valuables 100 comprises: a vertically operable stage 28 installed on a floor surface FS; a tilt adjustment jack 20 installed on an upper surface 28a of the vertically operable stage 28; a running water tank 12 installed in a manner such that a bottom surface 12b is tilted with respect to a horizontal plane by the tilt adjustment jack 20 on the upper surface 28a of the vertically operable stage 28; water (liquid) 10 introduced into the running water tank 12; a treatment object placement table 14 installed on the bottom surface 12b of the running water tank 12; and a height adjustment screw 16 installed on the water discharge side of the bottom surface 12b of the running water tank 12. The height of the vertically operable stage 28 can be adjusted by a height adjustment mechanism 28s. In addition, the bottom surface 12b of the running water tank 12 is tilted with respect to a horizontal plane such that water supply side is higher than the water discharge side. Thus, water in the running water tank 12 flows from the water supply side to the water discharge side. Meanwhile, the treatment object placement table 14 is supported by the bottom surface 12b of the running water tank 12 on the water supply side and by the height adjustment screw 16 on the water discharge side. Thus, an upper surface 14a of the treatment object placement table 14 is parallel to a horizontal plane. In addition, the apparatus for recovering valuables 100 further comprises a laser irradiator 60 (pulse fiber laser) having a laser machine head 50 including a condenser lens (not shown).

The apparatus for recovering valuables 100 further comprises: a circulating water tank 22 capable of storing water 10; a water supply channel 30 that is a flow path of the water 10 from the circulating water tank 22 to the water supply side of the running water tank 12; a circulating liquid feeding pump 24 for feeding the water 10 from the circulating water tank 22 to the running water tank 12 through the water supply channel 30; a flow rate control valve 26 for controlling the flow rate of the water 10 in the water supply channel 30 from the circulating water tank 22 to the water supply side of the running water tank 12; and a water discharge channel 40 that is a flow path of the water 10 from a discharge outlet 18 of the running water tank 12 to the circulating water tank 22. The circulating water tank 22 and the circulating liquid feeding pump 24 are installed on the floor surface FS. In the apparatus for recovering valuables 100, the water 10 is allowed to circulate through the circulating water tank 22, the water supply channel 30, the running water tank 12, and the water discharge channel 40.

The method for recovering valuables shown in FIG. 1 will be described. In this method for recovering valuables, as shown in FIG. 1 (a), a titanium base electrode scrap (treatment object (object to be processed)) 6 including a metal coating (valuables-containing member) 4 containing oxides of platinum group metals (valuables) such as, for example, Pt, Ir, and Ru on a flat surface 2s of a titanium base material (base material) 2 is prepared first (preparation step). Here, a titanium base electrode scrap means a scrap of a titanium base electrode. Titanium base electrodes are insoluble electrodes used in the electrochemical field, and therefore generally have a long life. However, when a metal coating of an electrode is gradually consumed, and the electrode catalytic capacity is reduced, making it impossible to maintain a certain level of performance, a metal coating is applied again or recovered as scraps.

Next, as shown in FIGS. 1 (b) and 2, the titanium base electrode scrap 6 is placed on the upper surface 14a of the treatment object placement table 14 of the apparatus for recovering valuables 100. Then, the depth and flow velocity of water 10 in the running water tank 12 were maintained within a predetermined range by adjusting the flow rate of the water 10 in the water supply channel 30 by the flow rate control valve 26. Accordingly, the titanium base electrode scrap 6 is immersed in the water 10 of the running water tank 12 such that the metal coating 4 of the titanium base electrode scrap 6 is disposed in the water 10 flowing through the running water tank 12, and a water film 10m (water 10) having a thickness within a predetermined range is provided to always intervene between the surface 4s of the metal coating 4 and a water surface 10s (immersion step).

Subsequently, although not shown, the height of the vertically operable stage 28 is adjusted by the height adjustment mechanism 28s such that the focal point of a laser beam focused by the condenser lens of the laser machine head 50 of the laser irradiator 60 in the apparatus for recovering valuables 100 is located on the metal coating 4 of the titanium base electrode scrap 6.

Next, as shown in FIGS. 1 (c) and 2, the metal coating 4 of the titanium base electrode scrap 6 immersed in the water 10 is irradiated with laser light through the water 10 using the laser machine head 50 while flowing the water 10 in the running water tank 12 under irradiation conditions that allow removing the metal coating 4 and maintaining the titanium base material 2 free from damage. Specifically, the planar region of the metal coating 4 is divided into a plurality of irradiation areas, and irradiation treatment was performed in each irradiation area. In the irradiation treatment of each irradiation area, a linear irradiation for repeatedly performing irradiation to scan linearly from one end to the other end in the X direction (depth direction in FIGS. 1 and 2) of the surface 4s of the irradiation area of the metal coating 4 by changing the traveling direction of the laser beam focused by the condenser lens of the laser machine head 50 is performed, and then, a planar irradiation for repeatedly performing the linear irradiation in order from one end to the other end in the Y direction (horizontal direction in FIGS. 1 and 2) of the surface 4s of the irradiation area of the metal coating 4 by changing the traveling direction of the laser beam is performed a plurality of times. In such case, any focal point of the laser beam irradiated on the surface 4s of the metal coating 4 is located on the metal coating 4. The laser wavelength, pulse width, laser output, repeat frequency, laser beam spot diameter, scan speed, feed rate, and number of irradiations (number of actually performed planar irradiations), and the like for the laser irradiator 60 (pulse fiber laser) are also set. Accordingly, the irradiation conditions of the laser light are adjusted so as to allow removing the metal coating 4 and maintaining the titanium base material 2 free from damage. Thus, the metal coating 4 is removed from the titanium base electrode scrap 6 while maintaining the titanium base material 2 free from damage, and removed matter 4p of the metal coating 4 is collected into the water 10 (collection step).

Next, the circulating water 10 is taken out from the apparatus for recovering valuables 100, and the removed matter 4p of the metal coating 4 in the water 10 is allowed to stand and settle, and then the water 10 is suction-filtered so as to recover the removed matter 4p of the metal coating 4 as a filtration residue (recovery step). As described above, oxides of platinum group metals contained in the metal coating 4 of the titanium base electrode scrap 6 are recovered.

In the method for recovering valuables shown in FIG. 1, by irradiating the metal coating 4 of the titanium base electrode scrap 6 with laser light through the water 10 as described above, the metal coating 4 is removed from the titanium base electrode scrap 6, and removed matter 4p of the metal coating 4 is collected into the water 10, thereby making it possible to recover the removed matter 4p of the metal coating 4 from the water 10. Therefore, unlike a method in which the metal coating 4 is removed by physical polishing, it is possible to prevent the removed matter 4p of the metal coating 4 from scattering. Accordingly, it is possible to suppress the loss of oxides of platinum group metals contained in the metal coating 4 in recovering the oxides. Since the removed matter 4p of the metal coating 4 is collected into the water 10, the removed matter 4p of the metal coating 4 can be easily recovered by filtration, concentration, or the like. In addition, it is possible to prevent ignition from occurring due to the polishing powder of the titanium base material 2 generated when the metal coating 4 is physically polished. Unlike a method in which the metal coating 4 is removed by blasting, since the removed powder of the metal coating 4 is not mixed with a large amount of a blasting powder, diluted therewith, and spread, metal oxides of platinum group metals can be easily recovered. In addition, unlike a method in which the metal coating 4 is dissolved with a chemical, for example, a strong acid such as a hydrofluoric acid compounds or a strong alkali so as to be removed, a large amount of waste liquid is not generated, and besides, the water 10 in which the removed matter 4p of the metal coating 4 is collected can be reused as a liquid for immersion by filtering the water 10, thereby allowing waste liquid to be minimized. Therefore, the impact on the environment can be suppressed, and equipment for treatment of a large amount of waste liquid, exhaust gas treatment, or the like becomes unnecessary, which is advantageous in terms of cost.

In the method for recovering valuables shown in FIG. 1, in the above-described collection step, laser light is irradiated under the irradiation conditions that allow removing the metal coating 4 and maintaining the titanium base material 2 free from damage. Thus, unlike a method in which the metal coating 4 is removed by physical polishing and a method in which the metal coating 4 is dissolved with a chemical so as to be removed, since damage due to excessive polishing or dissolving of the titanium base material 2 can be avoided, reuse of the titanium base material 2 can be facilitated. Further, in the above-described collection step, the metal coating 4 of the titanium base electrode scrap 6 is irradiated with laser light through the water 10 while flowing the water 10. Thus, it is possible to flow the removed matter 4p of the metal coating 4 generated in the water 10 together with the water 10 while preventing the removed matter from staying between the surface 4s of the metal coating 4 remaining on the surface 2s of the titanium base material 2 and the water surface 10s. It is therefore possible to prevent the laser light from being shielded by the removed matter 4p of the metal coating 4 so as to prevent hindering the removal of the metal coating 4 remaining on the surface 2s of the titanium base material 2.

Thus, according to the method for recovering valuables of the embodiment, as with the method for recovering valuables shown in FIG. 1, it is possible to prevent the loss of valuables in recovering the valuables. In addition, the removed matter of the valuables-containing member can be easily recovered by filtration, concentration, or the like. The impact on the environment can also be suppressed, which is advantageous in terms of cost. Further, in a case in which a base material that is easily ignited by polishing, such as a titanium base material, is used as a base material, it is possible to avoid ignition due to the polishing powder of the base material. Furthermore, unlike a method in which a valuables-containing member is removed by blasting, the recovery of valuables can be facilitated.

According to the method for recovering valuables of the embodiment, as with the method for recovering valuables shown in FIG. 1, it is possible to prevent hindering the removal of the valuables-containing member in a case in which the valuables-containing member of the treatment object is irradiated with the laser light in the above-described collection step while flowing the liquid. In addition, as with the method for recovering valuables shown in FIG. 1, the reuse of the base material can be facilitated in a case in which the valuables-containing member of the treatment object is irradiated with laser light under the irradiation conditions that allow removing the valuables-containing member from the treatment object and maintaining the base material free from damage in the collection step.

Next, the steps and the like of the method for recovering valuables and the apparatus for recovering valuables according to the embodiment as well as the steps and the like of the method for producing valuables according to the embodiment will be described in detail.

### 1. Preparation Step

In the preparation step, a treatment object including a valuables-containing member that contains valuables on or above a surface of a base material is prepared.

The term "valuable(s)" used herein refers to a tangible object that is worth collecting and reusing. Examples of valuables include, but are not particularly limited to, precious metals, rare metals, and compounds such as alloys and oxides of precious metals and rare metals.

Examples of precious metals include Au, Ag, and platinum group metals (Ru, Rh, Pd, Os, Ir, and Pt). Examples of rare metals include Li, Be, B, Ti, V, Cr, Mn, Co, Ni, Ga, Ge, Se, Rb, Sr, Zr, Nb, Mo, In, Sb, Te, Cs, Ba, Hf, Ta, W, Re, Tl, Bi, and rare earths (Sc, Y, La, Ce, Pr, Nd, Pm, Sm, Eu, Gd, Tb, Dy, Ho, Er, Tm, Yb, and Lu).

The treatment object is not particularly limited as long as it has a valuables-containing member which contains valuables on or above a surface of a base material; however, it is usually a product that is recovered in order to reuse valuables contained in a valuables-containing member. As the treatment object, for example, one including a film-like valuables-containing member on a flat surface of a base material is preferable. This is because the process of removing the valuables-containing member can be easily performed by irradiating laser light. Examples of a treatment object including the film-like valuables-containing member on a flat surface of its base material include a titanium base electrode (insoluble electrode) including, for example, a metal coating containing an oxide of a platinum group metal on a flat surface of a titanium base material, a coated wafer including, for example, a metal coating containing a precious metal on a flat surface of a silicon wafer, and a precious metal plated product or the like.

### 2. Immersion Step

In the immersion step, the treatment object is immersed in a liquid such that the valuables-containing member of the treatment object is disposed in the liquid.

The liquid for immersing the treatment object is not particularly limited as long as when irradiating a valuables-containing member with laser light through a liquid in the collection step, the laser light can be transmitted through the liquid, and the valuables-containing member can be removed by the laser light transmitted through the liquid. For example, it is water or the like. The water may be, for example, tap water or the like.

A method in which the treatment object is immersed in a liquid is not particularly limited as long as the treatment object is immersed in a liquid such that the valuables-containing member of the treatment object is disposed in the liquid, and thus the liquid intervenes between the surface of the valuables-containing member and the liquid surface. In the method in which the treatment object is immersed in a liquid, it is preferable to increase the thickness of the liquid intervening between the surface of the valuables-containing member and the liquid surface from the viewpoint of preventing a failure in collecting removed matter of the valuables-containing member into the liquid in the absence of the liquid between the surface of the valuables-containing member and the liquid surface as a result of evaporation of the liquid caused by laser light when irradiating the valuables-containing member with laser light through the liquid in the collection step. Meanwhile, it is preferable to decrease the thickness from the viewpoint of preventing the laser light from being attenuated while being transmitted through the liquid when irradiating the valuables-containing member with laser light through the liquid in the collection step. From these viewpoints, it is preferable to set the thickness of the liquid intervening between the surface of the valuables-containing member and the liquid surface to, for example, 2 mm to 5 mm.

### 3. Collection Step

In the collection step, the valuables-containing member of the treatment object immersed in the liquid is irradiated with laser light through the liquid so as to remove the valuables-containing member from the treatment object, thereby collecting removed matter of the valuables-containing member into the liquid.

The expression "removed matter of the valuables-containing member" means a portion of the valuables-containing member removed from the treatment object. Examples of the form of removed matter of the valuables-containing member present in the liquid include particles such as suspended particles and colloidal particles dispersed in a liquid and ions dissolving in a liquid.

Type of laser is not particularly limited as long as when irradiating a valuables-containing member of a treatment object with laser through a liquid, the valuables-containing member can be removed. Examples thereof include fiber laser such as pulse fiber laser, CO2 laser, and YAG laser.

A method in which the valuables-containing member of the treatment object is irradiated with laser light through the liquid is not particularly limited as long as the valuables-containing member can be removed from the treatment object. However, examples thereof include a method in which a linear irradiation for repeatedly performing irradiation to scan linearly from one end to the other end in the X direction of the surface of the irradiation area of the valuables-containing member by changing the traveling direction of the laser beam is performed and then, a planar irradiation for repeatedly performing the linear irradiation in order from one end to the other end in the Y direction of the surface of the irradiation area of the valuables-containing member by changing the traveling direction of the laser beam is performed once or a plurality of times, as with the method for collecting valuables shown in FIG. 1. In this method, it is preferable that the focal point of the laser beam irradiated on the surface of the valuables-containing member is located on the valuables-containing member. This is because the valuables-containing member can be efficiently removed. In addition, the focal length of the laser beam is preferably a longer distance from the viewpoint of increasing the depth of focus, and preferably a shorter distance from the viewpoint of not attenuating the laser beam. The focal length, spot diameter, and depth of focus of the laser beam, as well as the irradiation area, can be adjusted, for example, by selecting a condenser lens.

Further, as the method in which the valuables-containing member of the treatment object is irradiated with laser light through the liquid, a method in which the valuables-containing member of the treatment object is irradiated with the laser light while flowing the liquid is preferable. This is because it is possible to prevent the removal of the valuables-containing member remaining on the surface of the base material from being hindered. The flow velocity of the liquid when flowing the liquid is preferably a faster flow velocity from the viewpoint of not retaining the removed matter of the valuables-containing member, and preferably a slower flow velocity from the viewpoint of suppressing fluctuation of the intensity of the laser light due to the rippling of the liquid.

Conditions for laser light irradiation are not particularly limited as long as the valuables-containing member can be removed from the treatment object. Irradiation conditions that allow removing the valuables-containing member from the treatment object and maintaining the base material free from damage are preferable. This is because the reuse of the base material can be facilitated. As such irradiation conditions, irradiation conditions that allow removing a greater proportion of the valuables-containing member are preferable, and irradiation conditions that allow removing the valuables-containing member as a whole are particularly preferable.

Specific conditions that can be set to adjust conditions for laser light irradiation vary depending on type of laser, but include, for example, laser wavelength, pulse width, laser output, repeat frequency, laser beam spot diameter, scan speed, feed rate, and number of irradiations. Therefore, in order to obtain irradiation conditions that allow removing the valuables-containing member from the treatment object and maintaining the base material free from damage, these specific conditions may be set.

### 4. Recovery Step

In the recovery step, removed matter of the valuables-containing member is recovered from the liquid.

A method in which removed matter of the valuables-containing member is recovered from the liquid is not particularly limited as long as removed matter of the valuables-containing member collected into the liquid can be taken out from the liquid and collected. A usual method can be used, but the method differs depending on the form when the removed matter of the valuables-containing member is present in the liquid. The method in which the removed matter is recovered from the liquid is, for example, a method in which particles of the removed matter are settled, a method in which particles of the removed matter are filtered, or the like in a case in which the removed matter of the valuables-containing member exists as particles such as suspended particles or colloidal particles dispersed in the liquid. In particular, in a case in which particles of the removed matter are fine particles, a method in which the particles are coagulated with a coagulating agent, and then settled or filtered. In a case in which the removed matter of the valuables-containing member exists as ions dissolving in the liquid, examples of the method include: a method in which after adsorbing ions of the removed matter on activated carbon, the removed matter is recovered from the activated carbon; a method in which after adsorbing ions of the removed matter on an ion exchange resin, the removed matter is recovered from the ion exchange resin; and a method in which ions of the removed matter are concentrated and recovered with an RO membrane.

### 5. Method for Recovering Valuables

The method for recovering valuables of the embodiment may further comprise a removal step of removing a shield from the treatment object before the collection step in a case in which the treatment object prepared in the preparation step has a shield such as a sticker that blocks laser light on the surface of the valuables-containing member. In addition, the method for recovering valuables may further comprise a concentration step of improving the quality (concentration) of valuables contained in the removed matter recovered in the recovery step after the recovery step. This is because the reuse of the valuables can be facilitated.

### 6. Apparatus for Recovering Valuables

The apparatus for recovering valuables is not particularly limited as long as the method for recovering valuables of the embodiment is performed by using the apparatus. For example, like the apparatus for recovering valuables 100 shown in FIG. 2, it comprises a liquid tank (e.g., running water tank 12), a liquid introduced into the liquid tank (e.g., water 10), and a laser irradiator (e.g., laser irradiator 60) for irradiating a valuables-containing member of a treatment object immersed in the liquid in the liquid tank with laser light through the liquid. It is preferable that the apparatus for recovering valuables comprises a liquid feeding mechanism for flowing the liquid in the liquid tank (e.g., a liquid feeding mechanism composed of a running water tank 12, a circulating water tank 22, a water supply channel 30, a circulating liquid feeding pump 24, a flow rate control valve 26, and a water discharge channel 40), in addition to the above components. This is because it is possible to irradiate the valuables-containing member of the treatment object with laser light while flowing the liquid. It is preferable that the apparatus for recovering valuables comprises a filtration device for filtering removed matter of the valuables-containing member in a flow path of the liquid in the liquid feeding mechanism, in addition to the liquid feeding mechanism. This is because since it is not necessary to exchange the liquid, the method for recovering valuables can be continuously carried out.

### 7. Method for Producing Valuables

The method for producing valuables comprises: a preparation step of preparing a treatment object including a valuables-containing member that contains valuables on or above a surface of a base material; an immersion step of immersing the treatment object in a liquid such that the valuables-containing member of the treatment object is disposed in the liquid; a collection step of irradiating the valuables-containing member of the treatment object immersed in the liquid with laser light through the liquid so as to remove the valuables-containing member from the treatment object, thereby collecting removed matter of the valuables-containing member into the liquid; and a recovery step of recovering the removed matter of the valuables-containing member from the liquid. According to the method for producing valuables of the embodiment, as it is possible to suppress the loss of valuables in recovering the valuables, the valuables can be produced with a high yield using the treatment object as a starting material.

Details of the preparation step, immersion step, collection step, and recovery step of the method for producing valuables are the same as those of the preparation step, immersion step, collection step, and recovery step of the above-described method for recovering valuables, respectively.

As with the method for recovering valuables described above, the method for producing valuables may further comprise a removal step of removing a shield from the treatment object before the collection step in a case in which the treatment object prepared in the preparation step has a shield such as a sticker that blocks laser light on the surface of the valuables-containing member. In addition, the method for producing valuables may further comprise a concentration step of improving the quality (concentration) of valuables contained in the removed matter recovered in the recovery step after the recovery step.

### Examples

Hereinafter, a method for recovering valuables, an apparatus for recovering valuables, and a method for producing valuables according to the embodiment will be described in more detail with reference to the Examples below.

### Example 1

After recovering valuables of a titanium base electrode scrap (treatment object (object to be processed)) by the method for recovering valuables according to the embodiment, a base material after recovery and recovered matter were evaluated.

### Valuables Recovery Process

As shown in FIG. 1 (a), 20 titanium base electrode scraps (treatment objects (objects to be processed)) 6 each including a metal coating (valuables-containing member) 4 formed by applying an oxide of platinum (Pt) (valuable) and an oxide of iridium (Ir) (valuable) to a surface 2s of a titanium base material 2 (base material) were prepared (preparation step).

Out of the prepared 20 titanium base electrode scraps 6, in 16 titanium base electrode scraps 6, the titanium base material 2 was roughly plate-shaped, a protrusion (not shown) was formed at the center of the titanium base material 2 in the planar direction, the shape of the titanium base material 2 in the planar direction was a rectangle of 115 mm × 185 mm, the thickness of the portion of the titanium base material 2 excluding the protrusion was 1.0 mm, and the average thickness of the metal coating 4 was 10 µm. In addition, in the other 4 titanium base electrode scraps 6, the titanium base material 2 was plate-shaped, the shape of the titanium base material 2 in the planar direction was a rectangle of 157 mm × 230 mm, the thickness of the titanium base material 2 was 2.0 mm, and the average thickness of the metal coating 4 was 10 µm. The total weight of the 20 titanium base electrode scraps 6 was 2810.9 g. All of the titanium base material 2 was dissolved by a fluoro-nitric acid washing process from a titanium base electrode scrap similar to the titanium base electrode scraps 6, in which the shape of the titanium base material 2 in the planar direction was a rectangle of 115 mm × 185 mm, among the 20 titanium base electrode scraps 6 serving as treatment objects. The remaining metal coating 4 was alkali-melted and then acid-dissolved. The Pt content and Ir content thereof were determined by inductively coupled plasma (ICP) optical emission spectroscopy. Based on their contents, the grade (concentration) of Pt and the grade (concentration) of Ir in the titanium base electrode scrap were determined. As a result, the grade of Pt was 0.026% by weight, and the grade of Ir was 0.044% by weight. ICP optical emission spectroscopy was performed using SPS-7800 manufactured by Hitachi High-Tech Science Corporation. The results of X-ray fluorescence (XRF) analysis of the average composition of the 20 titanium base electrode scraps 6 serving as treatment objects are shown in Table 1 below. The XRF analysis was performed using the 20 titanium base electrode scraps 6 as analysis samples and using EA1200VX manufactured by Hitachi High-Tech Science Corporation.

**[Table 1]**

| Component | Concentration [% by weight] | X-ray fluorescence intensity [cps] |
|---|---|---|
| Ti | 85.59(±0.25) | 29,244,649 |
| Mo | 0.02(±0.00) | 19,763 |
| Sn | 0.01(±0.00) | 11,283 |
| Fe | 0.12(±0.01) | 20,210 |
| Cu | 0.00(±0.01) | 175,966 |
| Pt | 3.71(±0.05) | 2,179,058 |
| Ir | 8.73(±0.07) | 3,365,492 |
| P | 1.81(±0.09) | 2,286,717 |

Subsequently, the following immersion step and collection step were performed on each of the 20 titanium base electrode scraps 6 serving as treatment objects.

First, as shown in FIGS. 1 (b) and 2, each titanium base electrode scrap 6 was placed on an upper surface 14a of a treatment object placement table 14 of an apparatus for recovering valuables 100. Then, the depth and flow velocity of water 10 in a running water tank 12 were maintained within a predetermined range by adjusting the flow rate of the water 10 in a water supply channel 30 by a flow rate control valve 26. Accordingly, the titanium base electrode scrap 6 was immersed in the water 10 of the running water tank 12 such that the metal coating 4 of the titanium base electrode scrap 6 was disposed in the water (liquid) 10 flowing through the running water tank 12, and a water film 10m having a thickness of about 2 mm to 5 mm was provided to always intervene between the surface 4s of the metal coating 4 and a water surface 10s (immersion step).

Subsequently, although not shown, the height of a vertically operable stage 28 was adjusted by a height adjustment mechanism 28s in order to set the distance between the surface 4s of the metal coating 4 and the laser irradiation surface of a condenser lens to 285 mm such that the focal point of a laser beam focused by the condenser lens (fθ = 254 (focal length: 285 mm to 290 mm)) of a laser machine head 50 of a laser irradiator 60 in an apparatus for recovering valuables 100 was located on the metal coating 4 of the titanium base electrode scrap 6.

Next, as shown in FIGS. 1 (c) and 2, the metal coating 4 of the titanium base electrode scrap 6 immersed in the water 10 was irradiated with laser light through the water 10 using the laser machine head 50 while flowing the water 10 in the running water tank 12 under irradiation conditions that allow removing the metal coating 4 and maintaining the titanium base material 2 free from damage. Specifically, the planar region of the metal coating 4 was divided into a plurality of irradiation areas, and irradiation treatment was performed in each irradiation area. In the irradiation treatment of each irradiation area, a linear irradiation for repeatedly performing irradiation to scan linearly from one end to the other end in the X direction (depth direction in FIGS. 1 and 2) of the surface 4s of the irradiation area of the metal coating 4 by changing the traveling direction of the laser beam focused by the condenser lens of the laser machine head 50 is performed, and then, a planar irradiation for repeatedly performing the linear irradiation in order from one end to the other end in the Y direction (horizontal direction in FIGS. 1 and 2) of the surface 4s of the irradiation area of the metal coating 4 by changing the traveling direction of the laser beam were performed 10 times (number of irradiations). In such case, any focal point of the laser beam irradiated on the surface 4s of the metal coating 4 was located on the metal coating 4. The trade name and model of the laser irradiator used for irradiating the laser light, the specifications of the laser, the specifications of the condenser lens, and other setting conditions are as follows. Accordingly, the irradiation conditions of the laser light were adjusted so as to allow removing the metal coating 4 and maintaining the titanium base material 2 free from damage.

### (Trade name and model of laser irradiator)

Trade name: Laser Cleaner manufactured by PCL Co., Ltd.
Model: CLX-100LS SH

### (Specifications of laser)

Type: Pulse fiber laser
Wavelength: 1060 nm to 1070 nm
Maximum average output: 100 W
Maximum laser peak output: 10 kW
Repeat frequency: 100 kHz
Power consumption: 1400 W (maximum)
Power supply: AC 100V ± 10% 15 A

### (Specifications of condenser lens)

Type: fθ = 254 (focal length: about 285 mm to 290 mm)
Laser beam spot diameter: 50 µm
Irradiation area size: 160 mm × 160 mm (maximum)

### (Other setting conditions)

Scan speed: 50 µm/pulse
Feed rate: 50 µm/line
Laser output: 100%
Number of irradiations: 10 times

By irradiating the metal coating 4 of the titanium base electrode scrap 6 with laser light as described above, the metal coating 4 was removed from the titanium base electrode scrap 6, and removed matter 4p of the metal coating 4 was collected into the water 10 of the running water tank 12 (collection step).

As described above, the immersion step and the collection step were performed on each of the 20 titanium base electrode scraps 6. Thereafter, the circulating water 10 was taken out from the apparatus for recovering valuables 100, and the removed matter 4p of the metal coating 4 in the water 10 was allowed to stand and settle, and then the water 10 was suction-filtered using filter paper (No. 2 Filter Paper manufactured by TOYO ROSHI KAISHA, Ltd.) and a filtration aid (KC FLOCK), thereby recovering the removed matter 4p of the metal coating 4 as a filtration residue (recovery step).

Next, the removed matter 4p of the metal coating 4 recovered from the 20 titanium base electrode scraps 6 was fired at 900°C for 3 hours in an electric heating furnace. Accordingly, recovered matter containing Pt and Ir was obtained.

### Evaluation

The total weight of the 20 titanium base electrode scraps 6 was 2804.7 g after the removal of the metal coating. The weight difference from that before the removal of the metal coating 4 was 6.2 g. The results of XRF analysis of the average composition of the 20 titanium base electrode scraps 6 after the removal of the metal coating are shown in Table 2 below. The XRF analysis was performed using the 20 titanium base electrode scraps 6 after the removal of the metal coating as analysis samples and using an apparatus similar to that for analyzing the scraps before the removal.

**[Table 2]**

| Component | Concentration [% by weight] | X-ray fluorescence intensity [cps] |
|---|---|---|
| Ti | 99.76(±0.23) | 45,006,795 |
| Fe | 0.06(±0.01) | 7,747 |
| Ir | 0.14(+0.01) | 40,734 |
| Pt | 0.04(±0.01) | 21,345 |

The weight of recovered matter after firing was 6.22 g. The Pt content and the Ir content in the recovered matter after firing were determined with the above-described apparatus by ICP optical emission spectroscopy. Based on their contents, the grade (concentration) of Pt and the grade (concentration) of Ir in the 20 titanium base electrode scraps 6 serving as treatment objects were determined. As a result, the grade of Pt was 0.022% by weight, and the grade of Ir was 0.060% by weight. The grade (concentration) of Pt and the grade (concentration) of Ir in the recovered matter after firing determined based on their contents were 10.1% by weight and 26.9% by weight, respectively. The results of XRF analysis of the composition of the recovered matter after firing are shown in Table 3 below. The XRF analysis was performed using the recovered matter after firing as an analysis sample and using an apparatus similar to that for analyzing the scraps before the removal.

**[Table 3]**

| Component | Concentration [% by weight] | X-ray fluorescence intensity [cps] |
|---|---|---|
| Ti | 36.40(±0.45) | 3,888,198 |
| Cr | 0.12(±0.03) | 25,037 |
| Zr | 0.03(±0.01) | 12,626 |
| Mo | 0.06(±0.01) | 29,472 |
| Sn | 0.08(±0.01) | 42,308 |
| Fe | 0.83(±0.04) | 180,249 |
| Ni | 0.22(±0.02) | 123,795 |
| Zn | 0.20(±0.01) | 159,920 |
| Ir | 46.21(±0.25) | 16,730,282 |
| Pt | 15.86(±0.16) | 9,435,071 |

The concentration of Pt and the concentration of Ir in the water 10 (volume: 15 L) after suction filtration were determined by ICP optical emission spectroscopy with the above-described apparatus. As a result, the concentration of Pt was 0.5 ppm by weight (Pt content: 0.008 g), and the concentration of Ir was 0.7 ppm by weight (Ir content: 0.011 g).

Based on the above results, it is considered that in the method for recovering valuables according to Example 1, when recovering a Pt oxide and an Ir oxide from a titanium base electrode scrap 6 including a metal coating 4 containing a Pt oxide and an Ir oxide on a surface 2s of a titanium base material 2, it was possible to recover them with recovery rates as high as those in the recovery method using a fluoro-nitric acid washing process, making it possible to suppress loss thereof. It is further considered that most of the removed matter 4p could be recovered from the water 10 in which the removed matter 4p of the metal coating 4 was collected by suction filtration.

### Example 2

After recovering valuables of an Ir-coated wafer (treatment object (object to be processed)) by the method for recovering valuables according to the embodiment, the base material after recovery and the recovered matter were evaluated.

### Valuables Recovery Process

First, 12 Ir-coated wafers (treatment objects (objects to be processed)) each including an Ir (iridium) coating (valuables-containing member) containing Ir (valuable) on a flat surface of silicon wafer (base material) were prepared (preparation step).

Each prepared Ir-coated wafer had a circular shape with a diameter of 200 mm in the planar direction, the thickness of the silicon wafer was 0.725 mm, the thickness of the Ir coating was 2 µm, and the total weight of the 12 wafers was 641.1 g. The results of XRF analysis of the average composition of the 12 Ir-coated wafers are shown in Table 4 below. The XRF analysis was performed using the 12 Ir-coated wafers as analysis samples and using an apparatus similar to that for analyzing the scraps before the removal in Example 1.

**[Table 4]**

| Component | Concentration [% by weight] | X-ray fluorescence intensity [cps] |
|---|---|---|
| Ir | 2.20(±0.03) | 854,161 |
| Si | 97.80(±0.33) | 28,377,706 |

Subsequently, using the apparatus for recovering valuables 100 shown in FIG. 2, the following immersion step and collection step were performed on each of the 12 Ir-coated wafers.

First, each Ir-coated wafer was placed on an upper surface 14a of a treatment object placement table 14 of the apparatus for recovering valuables 100. Then, the depth and flow velocity of water 10 in a running water tank 12 were maintained within a predetermined range by adjusting the flow rate of the water 10 in a water supply channel 30 by a flow rate control valve 26. Accordingly, the Ir-coated wafer was immersed in the water 10 of the running water tank 12 such that the Ir coating of the Ir-coated wafer was disposed in the water (liquid) 10 flowing through the running water tank 12, and a water film 10m having a thickness of about 2 mm to 5 mm was provided to always intervene between the surface of the Ir coating and a water surface 10s (immersion step).

Subsequently, the height of a vertically operable stage 28 was adjusted by a height adjustment mechanism 28s in order to set the distance between the surface of the Ir coating and the laser irradiation surface of a condenser lens to 285 mm such that the focal point of a laser beam focused by the condenser lens (fθ = 254 (focal length: 285 mm to 290 mm)) of a laser machine head 50 of a laser irradiator 60 in an apparatus for recovering valuables 100 was located on the Ir coating of the Ir-coated wafer.

Next, the Ir coating of the Ir-coated wafer immersed in the water 10 was irradiated with laser light through the water 10 using the laser machine head 50 while flowing the water 10 in the running water tank 12 under irradiation conditions that allow removing the Ir coating and maintaining the silicon wafer free from damage. Specifically, the planar region of the Ir coating was divided into a plurality of irradiation areas, and irradiation treatment was performed in each irradiation area. In the irradiation treatment of each irradiation area, planar irradiation, in which linear irradiation for repeatedly performing irradiation so as to scan linearly from one end to the other end in the X direction (depth direction in FIG. 2) of the surface of the irradiation area of the Ir coating by changing the traveling direction of the laser beam focused by the condenser lens of the laser machine head 50 is repeated in order from one end to the other end in the Y direction (horizontal direction in FIG. 2) of the surface of the irradiation area of the Ir coating by changing the traveling direction of the laser beam, was performed 10 times (number of irradiations). In such case, any focal point of the laser beam irradiated on the surface of the Ir coating was located on the Ir coating. The trade name and model of the laser irradiator used for irradiating the laser light, the specifications of the laser, the specifications of the condenser lens, and other setting conditions are as follows. Accordingly, the irradiation conditions of the laser light were adjusted so as to allow removing the Ir coating and maintaining the silicon wafer free from damage.

### (Trade name and model of laser irradiator)

Trade name: Laser Cleaner manufactured by PCL Co., Ltd.
Model: CLX-100LS SH

### (Specifications of laser)

Type: Pulse fiber laser
Wavelength: 1060 nm to 1070 nm
Maximum average output: 100 W
Maximum laser peak output: 10 kW
Repeat frequency: 100 kHz
Power consumption: 1400 W (maximum)
Power supply: AC 100V ± 10% 15 A

### (Specifications of condenser lens)

Type: fθ = 254 (focal length: about 285 mm to 290 mm)
Laser beam spot diameter: 50 µm
Irradiation area size: 160 mm × 160 mm (maximum)

### (Other setting conditions)

Scan speed: 50 µm/pulse
Feed rate: 50 µm/line
Laser output: 100%
Number of irradiations: 10 times

By irradiating the Ir coating of the Ir-coated wafer with laser light as described above, the Ir coating was removed from the Ir-coated wafer, and removed matter of the Ir coating was collected into the water 10 of the running water tank 12 (collection step).

As described above, the immersion step and the collection step were performed on each of the 12 Ir-coated wafers. Thereafter, the circulating water 10 was taken out from the apparatus for recovering valuables 100, and the removed matter of the Ir coating in the water 10 was allowed to coagulate and settle with a coagulating agent, and then the water 10 was suction-filtered using filter paper (No. 2 Filter Paper manufactured by TOYO ROSHI KAISHA, Ltd.) and a filtration aid (KC FLOCK), thereby recovering the removed matter of the Ir coating as a filtration residue (recovery step).

Next, the removed matter of the Ir coating recovered from the 12 Ir-coated wafers was fired at 900°C for 3 hours in an electric heating furnace, thereby obtaining recovered matter containing Ir.

### Evaluation

The total weight of the 12 Ir-coated wafers was 640.3 g after the removal of the Ir coating. The weight difference from that before the removal of the Ir coating was 0.8 g. The results of XRF analysis of the average composition of the 12 Ir-coated wafers after the removal of the Ir coating are shown in Table 5 below. The XRF analysis was performed using the 12 Ir-coated wafers after the removal of the Ir coating as analysis samples and using an apparatus similar to that for analyzing the scraps before the removal in Example 1.

**[Table 5]**

| Component | Concentration [% by weight] | X-ray fluorescence intensity [cps] |
|---|---|---|
| Ir | 0.11(±0.01) | 65,242 |
| Si | 99.89(±0.25) | 49,500,865 |

The weight of recovered matter after firing was 0.80 g. The results of XRF analysis of the composition of the recovered matter after firing are shown in Table 6 below. The XRF analysis was performed using the recovered matter after firing as an analysis sample and using an apparatus similar to that for analyzing the scraps before the removal in Example 1.

**[Table 6]**

| Component | Concentration [% by weight] | X-ray fluorescence intensity [cps] |
|---|---|---|
| Ti | 0.43(±0.06) | 33,376 |
| Cr | 1.89(±0.06) | 396,623 |
| Ag | 0.14(±0.01) | 49,618 |
| In | 0.10(±0.01) | 36,345 |
| Ir | 85.30(±0.27) | 21,778,139 |
| Mn | 0.27(±0.03) | 64,761 |
| Fe | 10.99(±0.11) | 2,296,075 |
| Ni | 0.61(±0.02) | 264,613 |
| Zn | 0.27(±0.01) | 164,074 |

The concentration of Ir in the water 10 (volume: 4.5 L) circulating before filtration in the apparatus for recovering valuables 100 was determined by ICP optical emission spectroscopy with the above-described apparatus. As a result, the Ir concentration was 0.9 ppm by weight. Similarly, as a result of determining the concentration of Ir in the water 10 (volume: 4.5 L) after coagulation-filtration by ICP optical emission spectroscopy, the concentration of Ir was less than 0.1 wt ppm.

Based on the above results, it is considered that in the method for recovering valuables according to Example 2, when recovering Ir from an Ir-coated wafer including an Ir coating containing Ir on the surface of the silicon wafer, it was possible to recover Ir with a high recovery rate, making it possible to suppress the loss of Ir. It is also considered that almost all of the Ir coating could be removed, and the silicon wafer was maintained free from damage. It is further considered that most of the removed matter could be recovered from the water in which the removed matter of the Ir coating was collected by suction filtration.

The embodiment according to the method for recovering valuables, apparatus for recovering valuables, and method for producing valuables of the present disclosure are described in detail above. However, the present disclosure is not limited to the above-described embodiment, and various design changes can be made without departing from the spirit of the present disclosure described in the claims.

### DESCRIPTION OF SYMBOLS

- 2: Titanium base material
- 4: Metal coating
- 4p: Removed matter
- 6: Titanium base electrode scrap
- 10: Water
- 10m: Water film
- 12: Running water tank
- 14: treatment object placement table
- 16: Height adjustment screw
- 18: Discharge outlet
- 20: Tilt adjustment jack
- 22: Circulating water tank
- 24: Circulating liquid feeding pump
- 26: Flow rate control valve
- 28: Vertically operable stage
- 30: Water supply channel
- 40: Water discharge channel
- 50: Laser machine head
- 60: Laser irradiator
- 100: Apparatus for recovering valuables

## Claims

1. A method for recovering valuables comprising:
a preparation step of preparing a treatment object including a valuables-containing member that contains valuables on or above a surface of a base material;
an immersion step of immersing the treatment object in a liquid such that the valuables-containing member of the treatment object is disposed in the liquid;
a collection step of irradiating the valuables-containing member of the treatment object immersed in the liquid with laser light through the liquid so as to remove the valuables-containing member from the treatment object, thereby collecting removed matter of the valuables-containing member into the liquid; and
a recovery step of recovering the removed matter of the valuables-containing member from the liquid.

2. The method for recovering valuables according to claim 1, which comprises irradiating the valuables-containing member of the treatment object immersed in the liquid with the laser light while flowing the liquid in the collection step.

3. The method for recovering valuables according to claim 1 or 2, which comprises irradiating the valuables-containing member of the treatment object with the laser light under irradiation conditions that allow removing the valuables-containing member and maintaining the base material free from damage in the collection step.

4. An apparatus for recovering valuables comprising:
a liquid tank; and
a laser irradiator for irradiating a valuables-containing member of a treatment object immersed in a liquid in the liquid tank with laser light through the liquid.

5. The apparatus for recovering valuables according to claim 4, which further comprises a liquid feeding mechanism for flowing the liquid in the liquid tank.

6. The apparatus for recovering valuables according to claim 5, which further comprises a filtration device for filtering removed matter of the valuables-containing member in a flow path of the liquid in the liquid feeding mechanism.

7. A method for producing valuables comprising:
a preparation step of preparing a treatment object including a valuables-containing member that contains valuables on or above a surface of a base material;
an immersion step of immersing the treatment object in a liquid such that the valuables-containing member of the treatment object is disposed in the liquid;
a collection step of irradiating the valuables-containing member of the treatment object immersed in the liquid with laser light through the liquid so as to remove the valuables-containing member from the treatment object, thereby collecting removed matter of the valuables-containing member into the liquid; and
an recovery step of recovering the removed matter of the valuables-containing member from the liquid.

8. The method for producing valuables according to claim 7, which comprises irradiating the valuables-containing member of the treatment object immersed in the liquid with the laser light while flowing the liquid in the collection step.

9. The method for producing valuables according to claim 7 or 8, which comprises irradiating the valuables-containing member of the treatment object with the laser light under irradiation conditions that allow removing the valuables-containing member and maintaining the base material free from damage in the collection step.
